# EUROPEAN PATENT SPECIFICATION

(11) **EP 2 398 711 B1**
(45) Date of publication and mention of the grant of the patent: **09.04.2014**
(21) Application number: 10703481.1
(22) Date of filing: 12.02.2010
(51) Int. Cl.: B65B 25/14, B65B 51/12, B65B 51/16, B65B 51/32

(54) **DEVICE FOR HEAT-WELDING SUPERPOSED FLAPS OF A WRAPPING ENVELOPING A SET OF ARTICLES**
VORRICHTUNG ZUM WÄRMESCHWEISSEN VON ÜBEREINANDER ANGEORDNETEN LASCHEN EINER EINEN SATZ VON ARTIKELN UMHÜLLENDEN VERPACKUNG
DISPOSITIF POUR LE THERMOSOUDAGE DE VOLETS SUPERPOSÉS D'UN EMBALLAGE ENVELOPPANT UN ENSEMBLE D'ARTICLES

(30) Priority: 20.02.2009 IT BO20090098
(43) Date of publication of application: 28.12.2011
(73) Proprietor: INFINITY MACHINE & ENGINEERING CORP., De Pere WI 54115 (US)
(72) Inventor: INFINITY MACHINE & ENGINEERING CORP., De Pere WI 54115 (US)
(74) Representative: Dall'Olio, Christian
(86) International application number: PCT/EP2010/051823
(87) International publication number: WO 2010/094635

(56) References cited:
- WO-A1-2007/057938
- FR-A- 1 510 401
- GB-A- 961 805
- US-A- 2 451 728
- US-A- 3 218 961

## Description

### TECHNICAL FIELD

The present invention relates to the technical sector of automatic machines for packing a group of articles, ordered in a predetermined scheme, in a protective wrapper of heat-weldable plastic material. In more detail, the invention relates to a device for heat-welding superposed flaps that are located in the two longitudinal flaps of the wrapper, i.e. those which determine the final sealing thereof.

In the prior art for these wrappers there are, for example, those which wrap paper rolls (kitchen rolls, toilet paper, absorbent paper etc.) arranged flanked in one or more superpose layers.

### BACKGROUND ART

The above machines, known also as packing machines, in a first constructional design comprise a conveyor line provided with a lower opening, through which the group of articles is first introduced via a vertical movement from the bottom upwards, during which a sheet of plastic material arranged horizontally is intercepted, which sheet is caused to partially envelop the group; in a following horizontal movement of the group of articles and the associated sheet, insertion in the conveyor line is completed and, due to the action of appropriate lower folding devices, the longitudinal winding of the sheet is also completed, the ends of which sheet end up superposed on the lower horizontal surface of the package.

Heat-welding means are then commanded in phase relation to stably join the transversal edges.

WO2007057938 discloses a machine for packaging groups of products, comprising a magazine, means for supplying packaging sheets, apusher for unloading the product, a vertical folder, means for superimpose on the bottom of the product the last transverse end flaps of the packaging sheets, and means for fixing said bottom flaps.

Also known are packing machines in which the group of articles, already ordered and retained by lateral and upper elements, is first introduced to the conveyor line.

The group of articles advances and intercepts a vertical sheet of the plastic material which is induced to wrap the group of articles in a longitudinal direction and, in a following station, is heat-welded at transversal edges of the sheet which are superposed in the rear part of the pack.

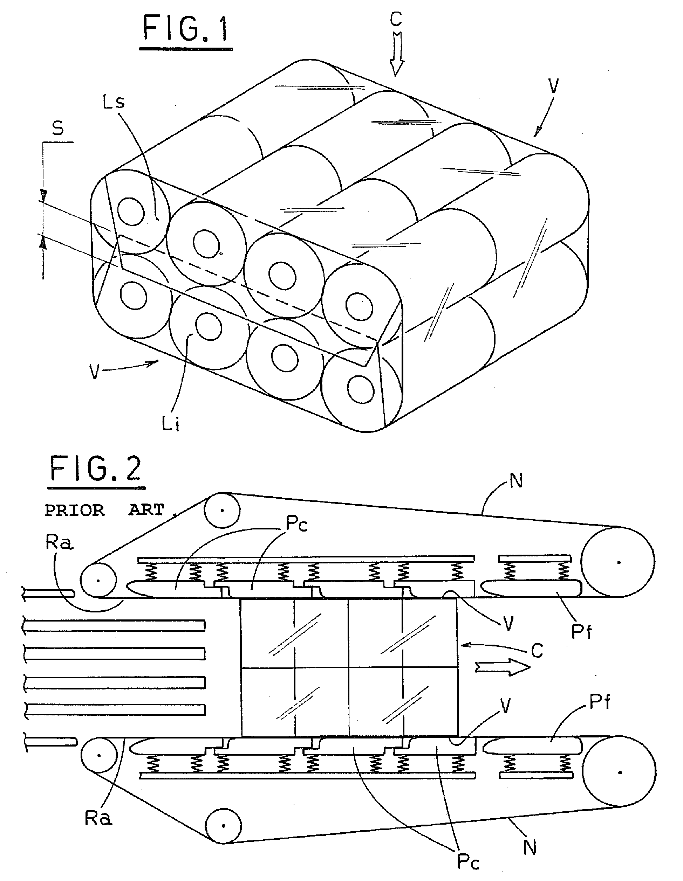

In both above-described configurations of the machines, once the longitudinal wrapping of the sheet and the heat-welding of the transversal edges has been completed, the pack is advanced on the conveyor line where it intercepts fixed folder devices which, in successive actions, act on the portions of sheet projecting from the longitudinal vertical sides V of the pack C in order to form, in each of the sides V, in order: a lower flap Li, folded upwards, and an upper flap Ls, folded downwards and partially superposed on the first flap at a strip S having a horizontal development (see figure 1).

A device is associated in-line to the outlet of the packing machine, which device receives the package C, keeping the flaps Ls, Li in position folded at the longitudinal vertical sides V, and heat-welds the flaps Ls, Li.

A type of device, of known type and widely used, is schematically illustrated in plan view in figure 2 and is constituted by a pair of conveyor belts N, symmetrically arranged such that the respective active branches Ra adhere to the longitudinal vertical sides V of the pack C, thus guaranteeing both the advancement thereof and the retaining of the folded flaps Ls, Li.

Respective rows of heated plates Pc are located internally of the active branches Ra, which plates Pc are sprung in a transversal direction to the advancement of the pack C, and against which the corresponding conveyor belts N drag.

The plates Pc, which can be for example made of aluminium, are heated by electric resistances and maintained at temperatures comprised between 250° and 330°, while the belts N are made preferably of Teflon and are slim, such as to have a low coefficient of friction with the plates Pc and guarantee effective transmission of the heat to the flaps Ls, Li which, retained between the belts N, are progressively brought to the melting temperature and joined by aggregation of the material.

Cold plates Pf are also located internally of the active branches Ra, following the rows of hot plates Pc, which cold plates Pf are also preferably sprung and are destined to lower the temperature of the flaps Ls, Li, in order to solidify the material and thus stabilise the completed welding.

The main drawback with a device made in this way is that the Teflon conveyor belts N suffer high degrees of wear and, due to the dragging against the plates, both hot and cold, have to be replaced frequently, about every seven to ten days of work, with heavy costs due to the cost of replacement, the intervention of operatives and machine down-time.

Adding to the problem of wear on the belts N, there is also the fact that the conveyor system of the most widely-used packing machines, due to the conformation thereof, impresses on the pack C during the final tract in which the pack is released to enter the device, a transitory acceleration which causes dragging on the initial tract of the belts N.

### SUMMARY OF THE INVENTION

The aim of the present invention is to provide a device for heat-welding superposed flaps in a pack wrapping a group of articles, which device is conformed such as to obviate the drawbacks of the known devices.

A further aim of the invention relates to the intention to provide a universal device, i.e. able to interface with all types of packing machines without any need for modifications.

A still further aim of the invention is to provide a device which is conformed in such a way as to absorb, with no negative consequences, any phenomenon of transitory acceleration impressed on the packs by the conveyor system of the packing machine.

A further aim of the invention consists in providing an especially reliable device as regards functioning, which can provide optimal heat-welding of the flaps, while at the same time being of simple conception, such that production costs are limited.

### BRIEF DESCRIPTION OF THE DRAWINGS

The characteristics of the invention will emerge from the following description of a preferred embodiment of the device, in agreement with what is set out in the claims and with the aid of the accompanying figures of the drawings, in which:
- figure 1 is a perspective view of a pack of paper rolls, with the flaps to be heat-welded in evidence;
- figure 2 is a schematic plan view of a device for heat-welding flaps of known type, cited in the preamble hereto;
- figure 3 is a schematic plan view of the device for heat-welding the flaps of the invention;
- figure 4 is a lateral view of the device of figure 3, sectioned along plane IV-IV of figure 3;
- figure 5 is a transversal cross-section of the device, along plane V-V of figure 4;
- figure 6 is an enlarged-scale illustration of a part of figure 3 with the relative means in operating condition;
- figure 7 is a still-further enlarged-scale illustration of detail K1 of figure 6, which highlights some constructional and operative details;
- figure 8 is a similar view to that of figure 6, showing a constructional variant of the device;
- figure 9A is a still-further enlarged view of detail K2 of figure 2, illustrating a first constructional solution relating to heat-welding rollers;
- figure 9B, similarly to figure 9A, illustrates a second constructional solution relating to heat-welding rollers;
- figure 10 is an axial section, along plane X-X, of the heat-welding roller of figure 9B.

### BEST MODE FOR CARRYING OUT THE INVENTION

With reference to the figures of the drawings, 1 denotes in its entirety the device for heat-welding of the invention, in an overall view.

The device 1 is destined to be associated, in line, downstream of a packing machine of known type, not illustrated in detail but of which the terminal portion of the conveyor line T can be viewed in the figures.

As already described herein above, the packing machine is designed to pack a group of articles, for example rolls of paper towels, toilet paper, absorbent paper and the like, which are ordered in a predetermined fashioned in a protective wrapper made of a heat-weldable plastic material, for example polythene.

The pack C which obtains at the exit of the conveyor line T exhibits, at each of the two longitudinal vertical side V thereof, of which only one is visible in figure 1, a lower flap Li, folded in an upwards direction, and an upper flap Ls, folded in a downwards direction and partially superposed on the lower flap Li, at a strip S having a horizontal development.

The device 1, similarly to the known-type device illustrated in figure 2 and cited in the preamble hereto, is destined to receive the pack C, keeping the flaps Ls, Li in position, folded at the longitudinal vertical sides V, and to heat-weld the flaps Ls, Li.

The device 1 comprises means 2 for receiving the packs C, and for moving the packs C downstream of the conveyor line T, in the same direction and at a velocity which is at least equal to the velocity of the line T.

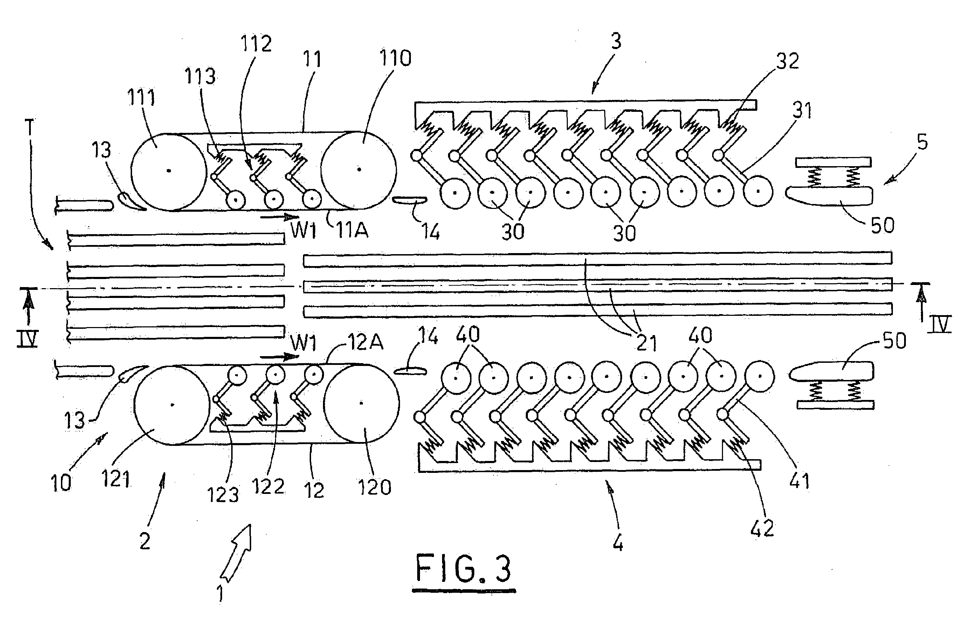

The means 2, in the preferred embodiment of the device 1 of figures 3, 4, 5, 6, comprise an inlet group 10, constituted by a pair of conveyor belts 11, 12, arranged symmetrically and provided for intercepting the longitudinal vertical sides V of the pack C, in outlet from the conveyor line T.

Each of the belts 11, 12 is closed ring-wound and stretched between corresponding pairs of pulleys, respectively a drive pulley 110, 120 and a driven pulley 111, 121, having relative vertical axes.

The belts 11, 12 are made of a very sturdy material, for example a textile or a rubbery material having metal wire inserts, and are able to provide a good friction coefficient in the contact surface with the vertical sides V of the pack C.

The drive pulleys 110, 120 are keyed on respective shafts with interposing of corresponding clutches of the freewheel type (not illustrated in detail as of known type) which enable free rotation of the pulleys 110, 120 with respect to the relative shafts in the advancement direction, while maintaining the constraint in the opposite direction; the reasons for this constructional detail will become evident in the following description.

The operative branches 11 A, 12A of the belts 11, 12 are subjected to the action of respective stretcher rollers 112, 122 which guarantee contact with the vertical sides V of the pack C.

The stretcher rollers 112, 122 used are advantageously of the elastically oscillating type, with use of relative elastic means 113, 123.

The drive pulleys 110, 120 are synchronously activated in opposite directions, such that the operative branches 11 A, 12A have an advancement direction W1 which is the same and a velocity which is at least equal to that of the conveyor line T.

The inlet group 10, with the respective initial part, is partially "superposed" on the terminal part of the conveyor line T.

The means 2 further comprise small connecting planes 13, 14, respectively situated upstream and downstream of the belts 11, 12 of the inlet group 10, destined to facilitate the entrance and exit of the pack C into and out of the inlet group 10 (figure 3).

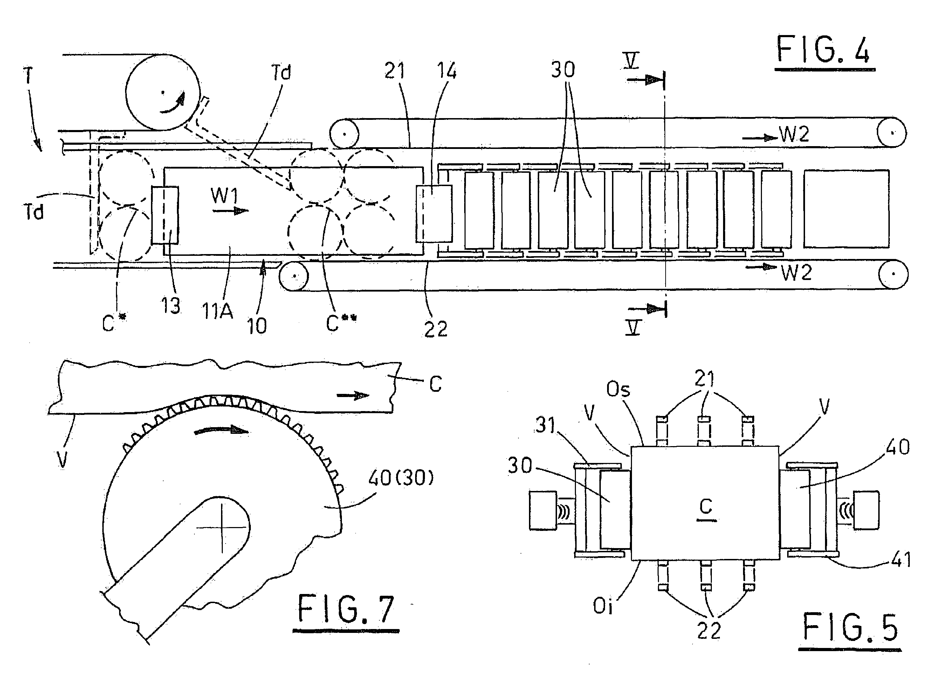

The means 2 further comprise upper conveyor straps 21 and lower conveyor straps 22, destined to cooperate with the inlet group 10 and respectively for encountering the upper horizontal side Os and the lower horizontal side Oi of the pack C (figures 4, 5); the straps 21, 22 are activated in synchrony by motor means, not illustrated, such that the operative branches thereof have a like advancement direction W2, and also a same direction as the advancement direction W1 of the inlet group 10.

The upper straps 21 exhibit an initial part in a suitably advanced position with respect to the position of the belts 11, 12, such as to enable exit of the drawing paddles Td of the conveyor line T, as described in more detail herein below (see in particular figure 4).

Two batteries 3, 4 of heat-welding idle rollers 30, 40 are located downstream of the inlet group 10, which batteries 3, 4 are symmetrically opposite one another and are reciprocally distanced in the longitudinal tract in which the upper straps 21 and the lower straps 22 extend.

The heat-welding idle rollers 30, 40 of each battery 3, 4 are arranged with the relative vertical axes mutually flanked and destined to intercept, in succession, the corresponding longitudinal vertical side V of the pack C, including the superposing strip S of the flaps Ls, Li, in order to heat the flaps Ls, Li up to a temperature which is sufficient to cause joining thereof by aggregation of the material thereof.

Each of the rollers 30, 40 is borne by respective tilting support means 31, 41, constituted, for example, by a right-angled lever, centrally hinged at a vertex thereof, with an arm bearing at an end thereof the roller 30, 40 and the other arm subjected to the action of elastic means 32, 42, which enable the roller 30, 40 to press elastically on the flaps Ls, Li in a transversal direction to the pack C, in consequence of the intercepting of the longitudinal vertical arm V.

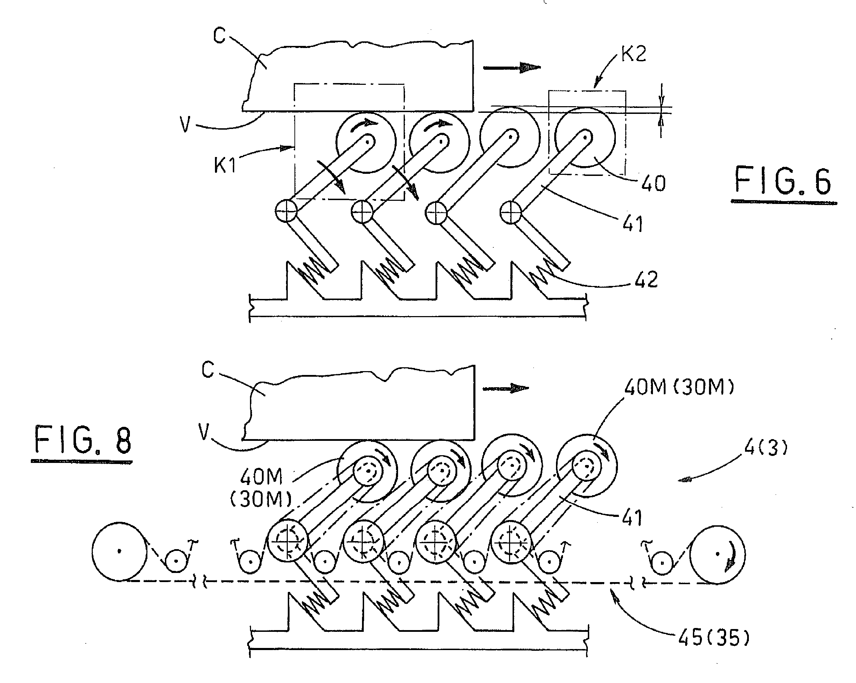

As can be seen from figures 3 and 6, the elastic oscillation of each roller 30, 40 is independent of the oscillation of the other rollers.

The rollers 30, 40 are heated and maintained constantly at a predetermined temperature (by way of example between 200°C and 300°C), by heating means associated to each of the rollers 30, 40.

The heating means, in a first possible embodiment denoted by references 130, 140, are of a hot-air type and comprise a semicircular casing 131, 141 destined to partially circumscribe the roller 30, 40 and at least an input conduit 132, 142 of hot air which opens in the space between the casing 131, 141 and the lateral surface of the roller 30, 40.

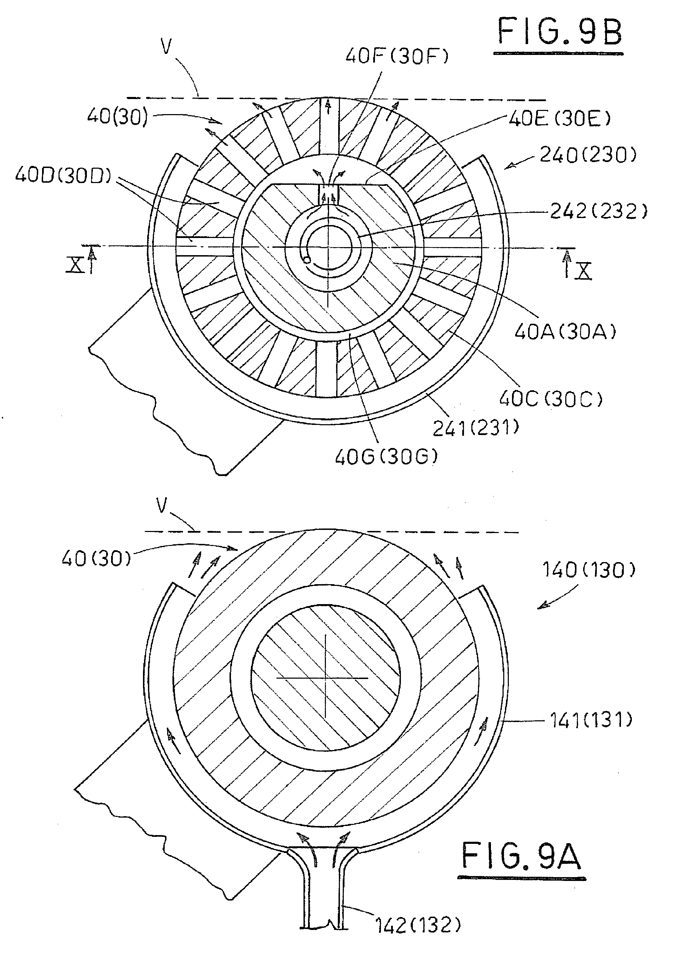

The hot air strikes the roller 30, 40 and heats it, and exits in the zone in which the roller enters into contact with the corresponding vertical side V of the pack C, also heating the plastic material of the wrapping, such as to facilitate heat-welding thereof (figure 9A).

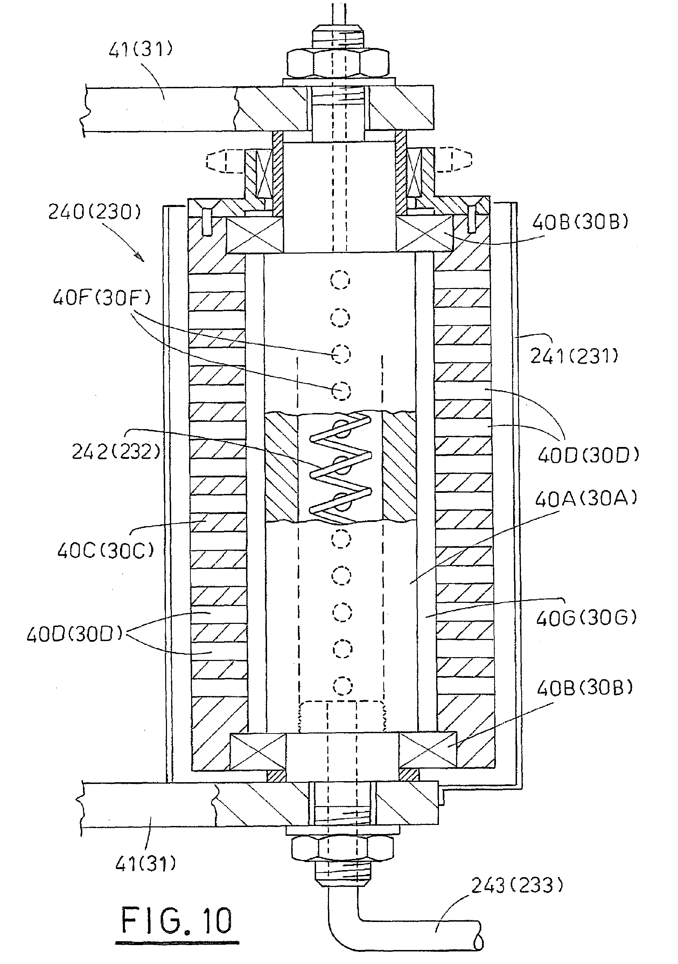

The heating means, in a second possible embodiment, denoted by references 230, 240, are of a mixed type, with electrical resistances and hot air, and are housed internally of each roller 30, 40 (figures 9B, 10).

Each roller 30, 40 is constituted by a fixed shaft 30A, 40A, associated to respective tilting support means 31, 41, on which, by means of interposing bearings 30B, 40B (for example ball bearings), an external roller surface 30C, 40C is rotatably borne, which external roller surface 30C, 40C is provided with a plurality of radial holes 30D, 40D.

The external roller surface 30C, 40C is partially covered by a semicircular casing 231, 241, similarly to what is described herein above.

The fixed shaft 30A, 40A is axially holed and is destined to house an electrical resistance 232, 242, for example a coil.

The electrical resistance 232, 242 is controlled by an appropriate heat probe of known type and not illustrated.

The central portion of the fixed shaft 30A, 40A bears a longitudinal flat section 30E, 40E, along which radial holes 30F, 40F are afforded which are destined to place the inside of the fixed shaft 30A, 40A in communication with an annular chamber 30G, 40G identified between the fixed shaft 30A, 40A and the external roller surface 30C, 40C.

Air is made to flow via an inlet conduit 233, 243 internally of the fixed shaft 30A, 40A, which air is heated by the electrical resistance 232, 242 and, via the radial holes 30F, 40F, reaches the annular chamber 30G, 40G; the hot air, together with the heat radiated by the electrical resistance 232, 242 raises the temperature of the external roller surface 30C, 40C.

The heated air further exits through the radial holes 30D, 40D of the external roller surface 30C, 40C and directed, also with the aid of the casing 231, 241 toward the contact zone between the roller 30, 40 and the plastic material of the wrapper, contributing to the rapid heating thereof, thus facilitating the heat-welding.

In a preferred embodiment, the lateral surface of the rollers 30, 40 is very rough, in order to improve cohesion of the material of the wrapping of the pack C, during heat-welding, thus optimising the welding operation.

The roughness can be obtained, for example, by milling (see figure 7).

The rollers 30, 40 are preferably made of metal and the lateral surface thereof can be clad with a layer of another material, for example Teflon, ceramic or another still.

Cooling means 5 are comprised downstream of the batteries 3, 4 of rollers 30, 40, which cooling means 5 are destined to act on the flaps Ls, Li heat-welded by the rollers 30, 40 in order to lower the temperature thereof and stabilise the join.

The cooling means 5, of substantially known type, are constituted by plates 50, preferably sprung, which are internally interested by the circulation (not illustrated) of a cooling fluid.

The means of the device 1 described up to now are borne by relative support frames, not illustrated, with interposing of regulating means, also not illustrated, for calibrating the respective work positions, according to the format of the pack C.

In particular, with reference to the width of the pack C, the following are regulated:
- the free space between the conveyor belts 11, 12 of the inlet group 10, in relation to the positions of the relative connecting planes 13, 14;
- the free space between the batteries 3, 4 of heat-welding rollers 30, 40, such as to define the interference with the longitudinal vertical sides V and thus the pressure elastically exerted by each roller on the flaps Ls, Li from which a dynamic deformation of the pack C in transit derives, which increases the contact surface with the corresponding roller 30, 40 (see figure 7);
- the free space between the cooling plates 50;
- the transversal interaxis between the upper straps 21 and, correspondingly, the lower flaps 22 (see figure 5).

The variation in the height of the pack C leads only to a matching of the level of the upper straps 21, as all the other described means exhibit a height development calibrated such as to be suited to the range comprised between the minimum and the maximum of the pack C.

The functioning of the device 1 will now be described, with the belts 11, 12 of the inlet group 10 and the upper straps 21 and the lower straps 22 activated at a same speed as that of the conveyor line T, and with the rollers 30, 40 heated to working temperature.

The pack C, conveyed by the relative drawing paddles Td of the conveyor line T, enters the belts 11, 12 of the inlet group 10 which are travelling at the same velocity (position C* in a dotted line of figure 4).

When the paddles Td begin to follow the circular trajectory about the return pulley of the conveyor line T they impress a transitory acceleration on the pack C and a consequent increase in velocity, which is accepted undraggingly by the belts 11, 12 due to the presence of the freewheel clutch on the drive pulleys 110, 120 (positions C**, broken line in figure 4).

The pack C thus enters into the grip of the upper straps 21 and lower straps 22 and is conveyed such as to transit between the batteries 3, 4 of heat-welding rollers 30, 40 where, as previously described, they are joined to the superposed flaps Ls, Li.

Immediately downstream, the cooling plates 50 stabilise the just-completed heat-welding.

In a first constructional variant of the device 1 the batteries 3, 4 are constituted by motorised heat-welding rollers 30M, 40M, destined to advance the pack C, downstream of the inlet group 10, in place of the upper straps 21 and the lower straps 22; the horizontal support of the pack C is given, for example, by a low-friction sliding plane, not illustrated.

Some of the motorised heat-welding rollers 30M, 40M and the relative flexible transmission means 35, 45 with which the rollers 30M, 40M are synchronously activated in the same direction are schematically illustrated in figure 8.

In the first variant, the means 2 for receiving and moving the packs C comprise, apart from the inlet group 10 with the relative connecting planes 13, 14, the motorised heat-welding rollers 30M, 40M, and the sliding plane.

A second constructional variant of the device 1, derived from the first and not illustrated, comprises a certain number of motorised rollers, arranged such as to precede the motorised heat-welding rollers 30M, 40M of the batteries 3, 4 to define the inlet group 10 in place of the belts 11, 12.

Each of the motorised rollers is borne with a vertical axis by tilting support means which are identical to the ones described herein above, and is keyed on the relative drawing gear with an interposing of a freewheel clutch, such as to have the same functional characteristics as described with reference to the belts 11, 12 in the transitory increase of velocity of the pack C.

The motorised heat-welding rollers 30M, 40M are also provided with heating means, for example such as those previously described with reference to the idle rollers 30, 40.

In this case too, the resting of the pack C is given by a low-friction sliding plane.

In the second variant, the means 2 for receiving and the movement of the packs C comprise the motorised rollers at the inlet, the motorised heat-welding rollers 30M, 40M, the sliding plane, as well as suitable connecting planes.

From the above description the special characteristics of the present device clearly emerge, especially in offering an optimal functioning for long time periods with the frequent and expensive maintenance operations with afflict the devices of the known art.

The device, as described herein, can be considered universal, as it can advantageously be interfaced with all types of packing machines without any need for modification.

Among the constructional solutions adopted for the device, it is important to make a special mentioned of the freewheel clutches, which do not generate dragging while aiding the transitory acceleration impressed on the packs by the conveyor system of the packing machine.

The described device, thanks to its simple conception, is particularly reliable during functioning and is able to optimally realise, with the roller batteries, the heat-welding of the flaps.

A further and not final positive note relates to the economic aspect, which delivers production costs that are certainly comparable to those of the prior-art solutions, but which enable considerable savings in management and maintenance costs, as specified.

The foregoing is intended by way of non-limiting example, and any modifications to details of the invention which might become necessary for technical and/or functional reasons, are considered to fall within the ambit of protection defined by the following claims.

## Claims

1. A device for heat-welding superposed flaps of a wrapping enveloping a pack of articles, destined to be placed downstream of the conveyor line (T) a packing machine in which the pack (C) of articles is formed, the flaps being arranged at longitudinal vertical sides (V) thereof, and folded in a predetermined order such that an upper flap (Ls) is external of and superposed on a lower flap (Li) and a superposing strip (S) develops horizontally, the device being **characterised in that** it comprises: two batteries (3, 4) of heat-welding rollers (30, 40) symmetrically opposite one another, the rollers (30, 40) of each battery (3, 4) being arranged with relative axes thereof disposed vertically, the two batteries (3, 4) being mutually flanked and destined to intercept in succession a corresponding longitudinal vertical side (V) of the pack (C), also including the strip (S) for superposing on the flaps (Ls, Li) in order to heat the flaps (Ls, Li) up to a temperature which is sufficient to cause joining thereof by aggregation of a material of which the flaps (Ls, Li) and the strip (S) are made; tilting support means (31, 41) associated to each of the rollers (30, 40) and enabling each of the rollers (30, 40) to press elastically on the flaps (Ls, Li) in a transversal direction to the pack (C), by intercepting the longitudinal vertical side (V) and independently of the other rollers (30, 40); cooling means (5) arranged downstream of the batteries (3, 4) of rollers and destined to act on the flaps (Ls, Li) which have been superposed and heat-welded by the batteries (3, 4) of rollers, which cooling means (5) lower the temperature of the flaps (3, 4) and stabilise the joining thereof; means (2) for receiving the packs (C), at an end of a conveyor line (T) comprised in the packing machine, the means (2) for receiving also being destined to move the packs (C) downstream of the packing machine, in a same direction, same sense and with a velocity which is at least equal to a velocity of the conveyor line (T), for a tract of a length which enables the packs (C) to transit first to the batteries (3, 4) of heat-welding rollers and then to the cooling means (5).

2. The device of claim 1, **characterised in that** the heat-welding rollers (30, 40) are borne idle on the respective tilting support means (31, 41).

3. The device of claim 1, **characterised in that** the heat-welding rollers (30, 40) exhibit a lateral surface having a high degree of roughness.

4. The device of claim 1, **characterised in that** the tilting support means (31, 41) are constituted by a right-angled lever, centrally articulated at a vertex thereof, with an arm thereof bearing the relative roller (30, 40) and with a remaining arm thereof subjected to an action of elastic means (32, 42) included for enabling the roller (30, 40) to press elastically on the flaps (Ls, Li), in a transversal direction to the pack (C), by intercepting the longitudinal vertical side (V).

5. The device of claim 1, **characterised in that** heating means (130, 140, 230, 240) for the heat-welding rollers (30, 40) and for maintaining the heat-welding rollers (30, 40) at a predetermined temperature are associated to the heat-welding rollers (30, 40).

6. The device of claim 5, **characterised in that** the heating means (130, 140) operate with hot air and comprise a semicircular casing (131, 141), designed to partially circumscribe the relative roller (30, 40) and at least an input conduit (132, 142) of hot air, opening into a space existing between the casing (131, 141) and the lateral surface of the roller (30, 40), the hot air being destined to strike and heat the roller (30, 40), as well as exiting from a zone in which the roller (30, 40) enters into contact with the corresponding vertical side (V) of the pack (C), and thus further heating the plastic material of the wrapping.

7. The device of claim 5, **characterised in that** the heating means (230, 240) exhibit an electrical resistance and operate with hot air and comprise: a semicircular casing (231, 241) designed to partially circumscribe the relative roller (30, 40), the roller (30, 40) being constituted by a fixed shaft (30A, 40A) on which an external surface (30C, 40C) is rotatably borne, the external surface (30C, 40C) being provided with a plurality of radial holes (30D, 40D); at least an electrical resistance (232, 242) housed internally of an axial hole realised in the fixed shaft (30A, 40A); an input conduit (233, 243) destined to enable air to flow internally of the axial hole of the fixed shaft (30A, 40A), which air is destined to be heated by the electrical resistance (232, 242); radial holes (30F, 40F), realised in the central portion of the fixed shaft (30A, 40A), which radial holes (30F, 40F) place the axial hole of the fixed shaft (30A, 40A) in communication with an annular chamber (30G, 40G) identified between the fixed shaft (30A, 40A) and the external surface (30C, 40C), the hot air together with the heat radiated by the electrical resistance (232, 242) being destined to heat the external surface (30C, 40C) as well as to exit through the radial holes (30D, 40D) present therein, in order to further heat the plastic material of the wrapping.

8. The device of claim 7, **characterised in that** a longitudinal flat portion (30F, 40F) is realised in a central portion of the fixed shaft (30A, 40A), at the position of the radial holes (30F, 40F).

9. The device of claim 1, **characterised in that** the means (2) for receiving and moving the packs (C) comprise: an inlet group (10) for intercepting the longitudinal vertical sides (V) of the packs (C), in outlet from the conveyor line (T) upstream of the batteries (3, 4) of rollers; clutch means, associated to the inlet group (10), destined to aid a transitory increase in velocity of the packs (C) on outlet from the conveyor line (T); connecting planes (13, 14) respectively situated upstream and downstream of the inlet group (10), destined to facilitate entry and exit of the pack (C) into and out of the inlet group (10); upper conveyor straps (21) and lower conveyor straps (22), respectively included for contactingly receiving the horizontal upper side (Os) and the horizontal lower side (Oi) of the pack (C), extending downstream of the inlet group (10) and being destined to cooperate with the inlet group (10) for advancing the pack (C).

10. The device of claim 1, **characterised in that** the means (2) for receiving and moving the packs (C) comprise: an inlet group (10), destined to intercept the longitudinal vertical sides (V) of the packs (C) in outlet from the conveyor line (T), and located before the batteries (3, 4) of rollers; clutch means, associated to the inlet group (10), destined to aid transitory increases in velocity of the packs (C) on outlet from the conveyor line (T); connecting planes (13, 14), respectively situated upstream and downstream of the inlet group (10), destined to facilitate entry and exit of the packs (C) into and out of the inlet group (10); powered heat-welding rollers (30M, 40M) included in the batteries (3, 4) destined to cooperate with the inlet group (10) for advancing the pack (C); a sliding plane for horizontally supporting the pack (C).

11. The device of claim 9 or 10, **characterised in that** the inlet group (10) is constituted by a pair of conveyor belts (11, 12) arranged symmetrically, each of which is ring-wound and stretched about corresponding pairs of pulleys, respectively a drive pulley (110, 120) and a driven pulley (111, 121) having relative vertical axes, and **characterised in that** the clutch means are defined by freewheel mechanism, interposed between the drive pulleys (110, 120) and the respective shafts, destined to enable free rotation of the drive pulleys (110, 120) with respect to the shafts in the advancement direction, while maintaining the constraint in the opposite direction.

12. The device of claim 11, **characterised in that** operative branches (11A, 12A) of the belts (11, 12) are subjected to action of the respective stretcher rollers (112, 122) which ensure contact with the vertical sides (V) of the pack (C).

13. The device of claim 10, **characterised in that** the inlet group (10) is constituted by two series of drive rollers, arranged symmetrically, with the rollers borne with a vertical axis by relative tilting support means, and **in that** the clutch means are defined by freewheel mechanisms, interposed between each of the drive rollers and the relative drawing gear, destined to enable free rotation of the drive roller with respect thereto in the advancement direction, while maintaining the constraint in the opposite direction.

## Patentansprüche

1. Vorrichtung zum Wärmeschweißen von übereinander angeordneten Laschen einer ein Gebinde von Artikeln umhüllenden Verpackung, dafür vorgesehen, stromabwärts von einer Fördererlinie (T) einer Verpackungsmaschine angeordnet zu werden, in der das Gebinde (C) von Artikeln gebildet wird, wobei die Laschen an vertikalen Längsseiten (V) davon angeordnet sind und in einer vorbestimmten Reihenfolge gefaltet werden, so dass sich eine obere Lasche (Ls) außerhalb von und diese überlagernd auf einer unteren Lasche (Li) befindet und sich ein entsprechender Überlagerungsstreifen (S) horizontal erstreckt, wobei die Vorrichtung **dadurch gekennzeichnet ist, dass** sie Folgendes beinhaltet: zwei Batterien (3, 4) von Heißsiegelwalzen (30, 40), die symmetrisch einander gegenüberliegen, wobei die Walzen (30, 40) jeder Batterie (3, 4) jeweils mit senkrecht ausgerichteten Achsen angeordnet sind und die zwei Batterien (3, 4) flankierend zueinander angeordnet und dazu bestimmt sind, nacheinander eine entsprechende vertikale Längsseite (V) des Gebindes (C) zu belegen, einschließlich des Streifens (S) der Überlagerung der Laschen (Ls, Li), um die Laschen (Ls, Li) bis zum Erreichen einer Temperatur aufzuheizen, die ausreichend ist, um deren Verbindung miteinander durch Aggregation des Werkstoffes zu bewirken, aus dem die Laschen (Ls, Li) und der Streifen (S) hergestellt sind; schwingbare Trägermittel (31, 41), die jeweils mit den entsprechenden Walzen (30, 40) verbunden sind und es jeder dieser Walzen (30, 40) ermöglichen, einen federnden Druck gegen die Laschen (Ls, Li) in einer Querrichtung zum Gebinde (C) auszuüben, indem sie die vertikale Längsseite (V) belegen und unabhängig von den anderen Walzen (30, 40) wirken; Kühlungsmittel (5), die stromabwärts von den Walzenbatterien (3, 4) angeordnet sind und dazu bestimmt sind, auf die Laschen (Ls, Li) zu wirken, die einander überlagert und von den Walzenbatterien (3, 4) heißgesiegelt wurden, wobei diese Kühlungsmittel (5) die Temperatur der Laschen (Ls, Li) absenken und dadurch deren Verbindung stabilisieren; Mittel (2) zur Übernahme der Gebinde (C) an einem Ende der Fördererlinie (T), die Bestandteil der Verpackungsmaschine ist, wobei diese Übernahmemittel (2) auch dafür bestimmt sind, die Gebinde (C) stromabwärts von der Verpackungsmaschine in einer gleichen Richtung, mit gleichem Bewegungssinn und mit einer Geschwindigkeit zu befördern, die zumindest gleich der Geschwindigkeit der Fördererlinie (T) ist, und zwar über eine Streckenlänge, die es den Gebinden (C) ermöglicht, zunächst den Bereich der Batterien (3, 4) von Heißsiegelwalzen und dann den der Kühlungsmittel (5) zu durchlaufen.

2. Vorrichtung nach Anspruch 1, **dadurch gekennzeichnet, dass** die Heißsiegelwalzen (30, 40) antriebslos von den entsprechenden schwingbaren Trägermitteln (31, 41) getragen werden.

3. Vorrichtung nach Anspruch 1, **dadurch gekennzeichnet, dass** die Heißsiegelwalzen (30, 40) eine seitliche Oberfläche mit einem hohen Rauheitsgrad aufweisen.

4. Vorrichtung nach Anspruch 1, **dadurch gekennzeichnet, dass** die schwingbaren Trägermittel (31, 41) aus einem rechtwinkligen Hebel bestehen, der mittig an seinem Scheitelpunkt ein Gelenk aufweist, wobei einer der Hebelarme die entsprechende Walze (30, 40) trägt und der verbleibende Arm der Wirkung elastisch federnder Mittel (32, 42) unterliegt, die vorgesehen sind, um es der Walze (30, 40) zu ermöglichen, in einer Querrichtung zum Gebinde (C) elastisch gegen die Laschen (Ls, Li) zu drücken, indem sie deren vertikale Längsseite (V) belegt.

5. Vorrichtung nach Anspruch 1, **dadurch gekennzeichnet, dass** Heizmittel (130, 140, 230, 240) zum Erwärmen der Heißsiegelwalzen (30, 40) und zum Halten der Heißsiegelwalzen (30, 40) auf einer vorbestimmten Temperatur mit den Heißsiegelwalzen (30, 40) verbunden sind.

6. Vorrichtung nach Anspruch 5, **dadurch gekennzeichnet, dass** die Heizmittel (130, 140) mit Heißluft arbeiten und ein halbkreisförmiges Gehäuse (131, 141) beinhalten, das dafür ausgelegt ist, die entsprechende Walze (30, 40) und zumindest einen Einlasskanal (132, 142) für Heißluft teilweise zu umfassen, der in einen Raum zwischen dem Gehäuse (131, 141) und der seitlichen Oberfläche der Walze (30, 40) mündet, wobei die Heißluft dafür bestimmt ist, auf die Walze (30, 40) zu treffen und diese zu erwärmen, sowie an einem Bereich auszutreten, an dem die Walze (30, 40) in Berührung mit der entsprechenden vertikalen Seite (V) des Gebindes (C) tritt, und somit weiter das Kunststoffmaterial der Verpackung zu erwärmen.

7. Vorrichtung nach Anspruch 5, **dadurch gekennzeichnet, dass** die Heizmittel (230, 240) einen elektrischen Widerstand aufweisen, mit Heißluft arbeiten und Folgendes beinhalten: ein halbkreisförmiges Gehäuse (231, 241), das dafür ausgelegt ist, die entsprechende Walze (30, 40) teilweise zu umfassen, wobei die Walze (30, 40) aus einer feststehenden Welle (30A, 40A) besteht, auf der eine äußere Oberfläche (30C, 40C) drehbar gelagert ist, wobei die äußere Oberfläche (30C, 40C) mehrere radiale Öffnungen (30D, 40D) aufweist; zumindest einen elektrischen Widerstand (232, 242), der im Innern einer axialen Öffnung untergebracht ist, die in der feststehenden Welle (30A, 40A) gefertigt ist; einen Einlasskanal (233, 243), der dafür bestimmt ist, das Strömen der Luft in der axialen Öffnung der feststehenden Welle (30A, 40A) zu ermöglichen, wobei diese Luft dafür bestimmt ist, durch den elektrischen Widerstand (232, 242) erwärmt zu werden; radiale Öffnungen (30F, 40F), die in dem mittleren Abschnitt der feststehenden Welle (30A, 40A) gefertigt sind, wobei diese radialen Öffnungen (30F, 40F) die axiale Öffnung der feststehenden Welle (30A, 40A) in Verbindung mit einer ringförmigen Kammer (30G, 40G) setzen, die zwischen der feststehenden Welle (30A, 40A) und der äußeren Oberfläche (30C, 40C) gebildet wird, wobei die Heißluft zusammen mit der vom elektrischen Widerstand (232, 242) abgegebenen Wärme dafür bestimmt ist, die äußere Oberfläche (30C, 40C) zu erwärmen und über die darin vorhandenen radialen Öffnungen (30D, 40D) auszutreten, um somit weiter das Kunststoffmaterial der Verpackung zu erwärmen.

8. Vorrichtung nach Anspruch 7, **dadurch gekennzeichnet, dass** in einem mittleren Abschnitt der feststehenden Welle (30A, 40A), an der Position der radialen Öffnungen (30F, 40F), ein länglicher flacher Abschnitt (30E, 40E) gefertigt ist.

9. Vorrichtung nach Anspruch 1, **dadurch gekennzeichnet, dass** die Mittel (2) zur Übernahme und Beförderung der Gebinde (C) Folgendes beinhalten: eine Einlassbaugruppe (10), welche die vertikalen Längsseiten (V) der aus der Fördererlinie (T) stromaufwärts von den Walzenbatterien (3, 4) auslaufenden Gebinde (C) eingreifend übernimmt; Kupplungsmittel, die mit der Einlassbaugruppe (10) verbunden sind und dazu dienen, eine vorübergehende Geschwindigkeitserhöhung der Gebinde (C) am Auslauf von der Fördererlinie (T) zu unterstützen; Verbindungsflächen (13, 14), die jeweils stromaufwärts und stromabwärts von der Einlassbaugruppe (10) angeordnet sind und dazu bestimmt sind, das Einlaufen beziehungsweise Auslaufen des Gebindes (C) in die beziehungsweise aus der Einlassbaugruppe (10) zu erleichtern; obere Fördergurte (21) und untere Fördergurte (22), die jeweils dafür vorgesehen sind, berührend an der horizontalen Oberseite (Os) beziehungsweise an der horizontalen Unterseite (Oi) des Gebindes (C) anzuliegen, die sich stromabwärts von der Einlassbaugruppe (10) erstrecken und dazu dienen, mit der Einlassbaugruppe (10) zusammenzuwirken, um das Gebinde (C) vorwärts zu befördern.

10. Vorrichtung nach Anspruch 1, **dadurch gekennzeichnet, dass** die Mittel (2) zur Übernahme und Beförderung der Gebinde (C) Folgendes beinhalten: eine Einlassbaugruppe (10), die dazu dient, die vertikalen Längsseiten (V) der Gebinde (C) am Auslauf aus der Fördererlinie (T) und vor den Walzenbatterien (3, 4) eingreifend zu übernehmen; Kupplungsmittel, die mit der Einlassbaugruppe (10) verbunden sind und dazu dienen, vorübergehende Geschwindigkeitserhöhungen der Gebinde (C) am Auslauf von der Fördererlinie (T) zu unterstützen; Verbindungsflächen (13, 14), die jeweils stromaufwärts und stromabwärts von der Einlassbaugruppe (10) angeordnet sind und dazu bestimmt sind, das Einlaufen beziehungsweise Auslaufen der Gebinde (C) in die beziehungsweise aus der Einlassbaugruppe (10) zu erleichtern; angetriebene Heißsiegelwalzen (30M, 40M), die in den Batterien (3, 4) enthalten und dazu bestimmt sind, mit der Einlassbaugruppe (10) zusammenzuwirken, um das Gebinde (C) vorwärts zu befördern; eine Gleitfläche zur horizontalen Unterstützung des Gebindes (C).

11. Vorrichtung nach Anspruch 9 oder 10, **dadurch gekennzeichnet, dass** die Einlassbaugruppe (10) aus einem Paar Förderbänder (11, 12) besteht, die symmetrisch angeordnet und jeweils ringförmig um entsprechende Paare von Riemenscheiben geschlossenen und gespannt sind, jeweils einer Antriebsscheibe (110, 120) und einer Abtriebsscheibe (111, 121) mit entsprechenden vertikalen Achsen, und **dadurch gekennzeichnet, dass** die Kupplungsmittel durch Freilaufmechanismen gebildet werden, die zwischen den Antriebsscheiben (110, 120) und den entsprechenden Wellen angeordnet und dazu bestimmt sind, die freie Drehung der Antriebsscheiben (110, 120) relativ zu den Wellen in Vorschubrichtung zu ermöglichen, während in der entgegengesetzten Richtung die Hemmbedingung beibehalten wird.

12. Vorrichtung nach Anspruch 11, **dadurch gekennzeichnet, dass** Arbeitstrume (11A, 12A) der Bänder (11, 12) der Wirkung entsprechender Spannrollen (112, 122) unterliegen, welche die Berührung mit den vertikalen Seiten (V) des Gebindes (C) sicherstellen.

13. Vorrichtung nach Anspruch 10, **dadurch gekennzeichnet, dass** die Einlassbaugruppe (10) aus zwei Reihen von Antriebsrollen besteht, die symmetrisch angeordnet sind, wobei diese Rollen mit einer vertikalen Achse auf entsprechenden schwingbaren Trägermitteln gelagert sind, und dadurch, dass die Kupplungsmittel durch Freilaufmechanismen gebildet werden, die zwischen den jeweiligen Antriebsrollen und dem entsprechenden Mitnehmergetriebe angeordnet und dazu bestimmt sind, die freie Drehung der Antriebsrolle relativ dazu in Vorschubrichtung zu ermöglichen, während in der entgegengesetzten Richtung die Hemmbedingung beibehalten wird.

## Revendications

1. Un dispositif pour le thermosoudage de rabats superposés d'un emballage enveloppant un paquet d'articles, destiné à être placé en aval d'une ligne de transport (T) d'une machine à emballer dans laquelle le paquet (C) d'articles est réalisé, les rabats étant situés au niveau de côtés verticaux longitudinaux (V) de celui-ci, et pliés dans un ordre prédéfini de manière à ce qu'un rabat supérieur (Ls) soit extérieur et superposé à un rabat inférieur (Li) et à ce qu'une bande de superposition (S) se développe horizontalement, le dispositif étant **caractérisé en ce qu'**il comprend : deux batteries (3, 4) de rouleaux de thermosoudage (30, 40) symétriquement opposés entre eux, lesdits rouleaux (30, 40) de chaque batterie (3, 4) étant disposés avec leur axe respectif à la verticale, les deux batteries (3, 4) étant mutuellement accolées et destinées à intercepter en succession un côté vertical longitudinal (V) correspondant du paquet (C), comprenant aussi la bande (S) de superposition sur les rabats (Ls, Li), de manière à chauffer lesdits rabats (Ls, Li) jusqu'à une température suffisante pour les joindre par agrégation du matériau dans lequel sont réalisés les rabats (Ls, Li) et la bande (S) ; des moyens basculants de support (31, 41) associés à chacun des rouleaux (30, 40) et permettant à chacun desdits rouleaux (30, 40) d'exercer une pression élastique sur les rabats (Ls, Li) dans une direction transversale au paquet (C), suite à l'interception du côté vertical longitudinal (V) et de façon indépendante par rapport aux autres rouleaux (30, 40) ; des moyens de refroidissement (5) disposés en aval des batteries (3, 4) de rouleaux et destinés à agir sur les rabats (Ls, Li) qui ont été superposés et thermosoudés par lesdites batteries (3, 4) de rouleaux, lesdits moyens de refroidissement (5) abaissent la température des rabats (Ls, Li) et stabilisent la jonction de ceux-ci ; des moyens (2) destinés à recevoir les paquets (C), à une extrémité de la ligne de transport (T) prévue dans la machine à emballer, lesdits moyens (2) de réception étant aussi destinés à transporter les paquets (C) en aval de la machine à emballer, dans une même direction, un même sens et à une vitesse qui est au moins égale à une vitesse de la ligne de transport (T), sur un tronçon ayant une longueur qui permet aux paquets (C) de passer d'abord au niveau des batteries (3, 4) de rouleaux de thermosoudage puis au niveau des moyens de refroidissement (5).

2. Le dispositif selon la revendication 1, **caractérisé en ce que** les rouleaux de thermosoudage (30, 40) sont portés, libres, sur les moyens basculants de support (31, 41) respectifs.

3. Le dispositif selon la revendication 1, **caractérisé en ce que** les rouleaux de thermosoudage (30, 40) présentent une surface latérale à haut degré de rugosité.

4. Le dispositif selon la revendication 1, **caractérisé en ce que** les moyens basculants de support (31, 41) sont constitués d'un levier à angle droit, articulé centralement au niveau d'un sommet de celui-ci, avec un bras portant le rouleau (30, 40) correspondant et avec un autre bras soumis à l'action de moyens élastiques (32, 42) prévus pour permettre au rouleau (30, 40) d'exercer une pression élastique sur les rabats (Ls, Li), dans une direction transversale au paquet (C), suite à l'interception du côté vertical longitudinal (V).

5. Le dispositif selon la revendication 1, **caractérisé en ce que** des moyens (130, 140, 230, 240) de chauffage des rouleaux de thermosoudage (30, 40) et de maintien desdits rouleaux de thermosoudage (30, 40) à une température prédéfinie sont associés aux rouleaux de thermosoudage (30, 40).

6. Le dispositif selon la revendication 5, **caractérisé en ce que** les moyens de chauffage (130, 140) opèrent avec de l'air chaud et comprennent un boîtier semi-circulaire (131, 141), destiné à entourer partiellement le rouleau (30, 40) correspondant, et au moins un conduit (132, 142) d'arrivée d'air chaud, débouchant dans un espace présent entre le boîtier (131, 141) et la surface latérale du rouleau (30, 40), l'air chaud étant destiné à investir et à chauffer le rouleau (30, 40), ainsi qu'à sortir au niveau d'une zone dans laquelle le rouleau (30, 40) entre en contact avec le bord vertical (V) correspondant du paquet (C), chauffant encore ainsi la matière plastique de l'emballage.

7. Le dispositif selon la revendication 5, **caractérisé en ce que** les moyens de chauffage (230, 240) présentent une résistance électrique, opèrent avec de l'air chaud et comprennent : un boîtier semi-circulaire (231, 241) destiné à entourer partiellement le rouleau (30, 40) correspondant, ledit rouleau (30, 40) étant constitué d'un arbre fixe (30A, 40A) sur lequel une surface extérieure (30C, 40C) est portée de façon rotative, ladite surface extérieure (30C, 40C) étant dotée d'une pluralité de trous radiaux (30D, 40D) ; au moins une résistance électrique (232, 242) logée à l'intérieur d'un trou axial réalisé dans l'arbre fixe (30A, 40A) ; un conduit d'arrivée (233, 243) destiné à permettre un flux d'air à l'intérieur du trou axial de l'arbre fixe (30A, 40A), ledit air est destiné à être chauffé par la résistance électrique (232, 242) ; des trous radiaux (30F, 40F), réalisés dans la partie centrale de l'arbre fixe (30A, 40A), lesdits trous radiaux (30F, 40F) mettent le trou axial de l'arbre fixe (30A, 40A) en communication avec une chambre annulaire (30G, 40G) définie entre l'arbre fixe (30A, 40A) et la surface extérieure (30C, 40C), l'air chaud ainsi que la chaleur irradiée par la résistance électrique (232, 242) étant destinés à chauffer la surface extérieure (30C, 40C) et à sortir à travers les trous radiaux (30D, 40D) qui y sont présents, de manière à chauffer encore la matière plastique de l'emballage.

8. Le dispositif selon la revendication 7, **caractérisé en ce qu'**une portion plate longitudinale (30E, 40E) est réalisée dans une portion centrale de l'arbre fixe (30A, 40A), au niveau de la position des trous radiaux (30F, 40F).

9. Le dispositif selon la revendication 1, **caractérisé en ce que** les moyens (2) de réception et de transport des paquets (C) comprennent : un groupe d'entrée (10) pour intercepter les côtés verticaux longitudinaux (V) des paquets (C), à la sortie de la ligne de transport (T) en amont des batteries (3, 4) de rouleaux ; des moyens à embrayage, associés au groupe d'entrée (10), destinés à favoriser une augmentation transitoire de vitesse des paquets (C) à la sortie de la ligne de transport (T) ; des plans de raccord (13, 14) respectivement situés en amont et en aval du groupe d'entrée (10), destinés à faciliter l'entrée et la sortie du paquet (C) dans et hors du groupe d'entrée (10) ; des courroies de transport supérieures (21) et des courroies de transport inférieures (22), respectivement prévues pour recevoir en contact le côté horizontal supérieur (Os) et le côté horizontal inférieur (Oi) du paquet (C), s'étendant en aval du groupe d'entrée (10) et étant destinées à coopérer avec ledit groupe d'entrée (10) pour faire avancer le paquet (C).

10. Le dispositif selon la revendication 1, **caractérisé en ce que** les moyens (2) de réception et de transport des paquets (C) comprennent : un groupe d'entrée (10), destiné à intercepter les côtés verticaux longitudinaux (V) des paquets (C) à la sortie de la ligne de transport (T), et situé avant les batteries (3, 4) de rouleaux ; des moyens à embrayage, associés au groupe d'entrée (10), destinés à favoriser des augmentations transitoires de vitesse des paquets (C) à la sortie de la ligne de transport (T) ; des plans de raccord (13, 14), respectivement situés en amont et en aval du groupe d'entrée (10), destinés à faciliter l'entrée et la sortie des paquets (C) dans et hors du groupe d'entrée (10) ; des rouleaux de thermosoudage motorisés (30M, 40M) prévus dans les batteries (3, 4) destinés à coopérer avec le groupe d'entrée (10) pour faire avancer le paquet (C) ; un plan de glissement pour le support horizontal du paquet (C).

11. Le dispositif selon la revendication 9 ou 10, **caractérisé en ce que** le groupe d'entrée (10) est constitué d'une paire de bandes transporteuses (11, 12) disposées symétriquement, chacune desquelles est enroulée en boucle et tendue autour de paires correspondantes de poulies, soit respectivement une poulie motrice (110, 120) et une poulie menée (111, 121) ayant des axes verticaux respectifs, et **caractérisé en ce que** les moyens à embrayage sont définis par des mécanismes à roue libre, interposés entre les poulies motrices (110, 120) et les arbres respectifs, destinés à permettre la rotation libre des poulies motrices (110, 120) par rapport aux arbres dans la direction d'avance, tout en maintenant une contrainte dans la direction opposée.

12. Le dispositif selon la revendication 11, **caractérisé en ce que** des branches opérationnelles (11A, 12A) des bandes (11, 12) sont soumises à l'action de rouleaux tendeurs (112, 122) respectifs qui assurent le contact avec les côtés verticaux (V) du paquet (C).

13. Le dispositif selon la revendication 10, **caractérisé en ce que** le groupe d'entrée (10) est constitué de deux séries de rouleaux moteurs, disposés symétriquement, avec lesdits rouleaux portés avec leur axe vertical par des moyens basculants de support respectifs, et **en ce que** les moyens à embrayage sont définis par des mécanismes à roue libre, interposés entre chacun des rouleaux moteurs et l'engrenage d'entraînement correspondant, destinés à permettre la rotation libre du rouleau moteur par rapport à celui-ci dans la direction d'avance, tout en maintenant une contrainte dans la direction opposée.
